# EUROPEAN PATENT APPLICATION

(11) **EP 2 138 827 A2**
(43) Date of publication of application: **30.12.2009**
(21) Application number: 09008148.0
(22) Date of filing: 22.06.2009
(51) Int. Cl.: G01N 21/27, G01N 21/51, G01N 21/59

(54) **Analyzing device**

(30) Priority: 23.06.2008 JP 2008163646
(71) Applicant: Horiba, Ltd., Kyoto-city, Kyoto 601-8510 (JP)
(72) Inventor: Shindo, Takaaki, Kyoto-city Kyoto 601-8510 (JP); Oue, Soichi, Kyoto-city Kyoto 601-8510 (JP); Komada, Yoshito, Kyoto-city Kyoto 601-8510 (JP); Ito, Itsuo, Kyoto-city Kyoto 601-8510 (JP)
(74) Representative: Müller - Hoffmann & Partner

(57) **Abstract**

An analyzing device is provided for, in a reaction system containing a reagent and a substance targeted to be measured, measuring a physical quantity varying according to a concentration variation of the substance targeted to be measured. This device includes: a physical quantity code storage portion for setting values of the physical quantities that can be taken at concentrations at N points of the substance targeted to be measured, and storing physical quantity codes formed by assigning codes to the set values; a code acceptance portion for accepting calibration curve codes containing codes selected from the physical quantity codes in correspondence with the reagent; a calibration curve code display portion for displaying the calibration curve codes accepted by the code acceptance portion; and a computation portion for generating a combination between a concentration and the physical quantity, using the physical quantity codes, in accordance with the calibration curve codes, and producing a calibration curve from the combination. The analyzing device provided can simplify information required to produce the calibration curve without lowering the order of an equation representing the calibration curve, allowing a person to reduce an effort required for input.

## Description

### FIELD OF THE INVENTION

### Technical Field

This invention relates to an analyzing device using a analyzing method requiring a calibration curve for immune reaction or the like.

### BACKGROUND OF THE INVENTION

### Background Art

Conventionally, to perform concentration measurement of proteins or the like, using an antigen antibody reaction, the concentrations are computed by:
- obtaining a variation of optical property due to the antigen antibody reaction in a solution as that of transmitted light or scattered light, using nephelometry, latex nephelometry, laser beam scattering or the like; and
- correlating the obtained variation with a calibration curve produced in advance, using a standard substance of a known concentration.

Further, conventionally, after one consecutive measurement has terminated, in a case where a further measurement is performed with a time interval being set, further calibration curves are created every time prior to starting the measurement.

However, it is cumbersome to measure standard substances and produce calibration curves every time, prior to starting the measurement.

Therefore, a calibration curve produced in advance for each lot has been recently imparted to a reagent. In order to enhance precision of this calibration curve, there is a need to complicate an equation, i.e., to use a high-order equation. Using such high-order equation, an increasing number of coefficients are required to produce a calibration curve. Thus, it takes a lot of trouble with inputs of the coefficients and the risk of an incorrect input increases.

With respect to a calibration curve represented by combining two cubic equations with each other, for example, if the number of coefficients (including constant terms) is 8 and the number of digits of each coefficient is 4, there occurs a need to input a numeric value of a total of 32 digits.

Further, an attempt is made to eliminate an effort required for input by storing parameters in a barcode or an IC chip and the like in order to simplify an input operation while utilizing a calibration curve made of a high-order equation. According to this means, a parameter reading device such as a magnetic card reader, a cassette tape recorder, a disk drive unit, or a barcode reader is additionally required (Patent Document 1).
[Patent Document 1] Japanese Patent Application Laid-open No. 8-101198

### SUMMARY OF THE INVENTION

### Problem(s) to Be Solved by the Invention

Therefore, the present invention aims to provide an analyzing device in which information required to produce a calibration curve is simplified, without lowering the order of an equation expressing the calibration curve, making it possible to reduce an effort required for input.

### Means for Solving the Problem(s)

A first aspect of the present invention is directed to an analyzing device for, in a reaction system containing a reagent and a substance targeted to be measured, measuring a physical quantity varying according to a concentration variation of the substance targeted to be measured, the analyzing device including: a physical quantity code storage portion for setting one or more values of the physical quantities that can be taken in concentrations at N points of the substance targeted to be measured, and storing one or more physical quantity codes formed by assigning codes to the set values; a code acceptance portion for accepting one or more calibration curve codes containing codes selected from the physical quantity codes in correspondence with the reagent; a calibration curve code display portion for displaying the calibration curve codes accepted by the code acceptance portion; and a computation portion for generating a combination between a concentration and the physical quantity, using the physical quantity codes, in accordance with the calibration curve codes, and producing a calibration curve from the combination.

A term "physical quantities" used in the present specification is not limitative in particular as long as it varies in conjunction with a concentration of a substance targeted to be measured, and includes: physical quantities such as absorbance, the number of photons in transmitted light or scattered light, electrification quantity, and conductivity or any other physical quantity varying in conjunction with fluctuations of these physical quantities. Further, a paraphrase "value that can be taken at a respective one of concentrations", appearing in the present specification, may be a theoretical value or an assessed value in a respective one of the concentrations at N points of a substance targeted to be measured, with respect to a predetermined physical quantity, or alternatively, may be an actual measurement. Further, uppercase and lowercase letters "N" and "n" used in the present specification represent natural numbers, respectively.

This arrangement allows a calibration curve code to be made of a combination of simple numbers, characters, and signs or the like, so that information required to produce a calibration curve can be simplified without lowering the order of an equation representing a calibration curve. Thus, precision of the calibration curve can be highly maintained while an effort, required to input the calibration curve code, is reduced. Therefore, the reliability of a measurement result obtained using the calibration curve produced according to the present invention is extremely high.

The calibration curve code can be produced using a method as shown below, for example. In other words, the calibration curve code can be produced using the method comprising the steps of: generating the physical quantity codes; measuring the physical quantities at the concentrations at the N points, of the substance targeted to be measured, using a lot targeted for producing a calibration curve of the reagent; selecting concentrations at "n" points (n < N) from among the concentrations at the N points, producing preliminary calibration curves from actual measurements of the physical quantities in the concentrations at the "n "points, and selecting one or more as a calibration curve, from the preliminary calibration curves; and correlating the actual measurements and the physical quantity codes with each other, in the concentrations at the "n" points used to produce the calibration curve, selecting any one of the set values, which is identical in concentration and is the most proximal to the actual measurement from among the physical codes, and assigning one or more codes to the calibration curves, based upon the codes assigned to the set values.

In order to ensure that concentration information is included in codes other than the physical quantity codes and that the calibration curve codes consist of a combination of simpler numbers, characters, or signs and the like, it is preferable that: the physical quantity code storage portion further stores concentration combination codes formed by assigning codes to a concentration combination for selecting one or more concentrations at "n" points from among the concentrations at the N points; the code acceptance portion accepts the physical quantity codes containing the codes selected from the physical quantity codes and concentration combination codes in correspondence with a reagent; and the computation portion produces a combination between a concentration and the physical quantity, using the physical quantity codes and the concentration combination codes, in accordance with the calibration curve codes, and produces a calibration curve based upon the combination.

A reagent according to the present invention is **characterised in that** it is adapted for use in: in a reaction system containing the reagent and a substance targeted to be measured, measuring a physical quantity varying according to a concentration variation of the substance targeted to be measured, with respect to concentrations at N points of the substance targeted to be measured; and selecting one or more concentrations at "n" points (n < N) from among the concentrations at the N points, producing preliminary calibration curves from actual measurements of the physical quantities in concentrations at the "n" points, and selecting at least one as a calibration curve, from among the preliminary calibration curves; wherein, from physical quantity codes formed by setting, in the concentrations at the "n" points, values of the physical quantities that can be taken in the concentrations at the N points, of the substance targeted to be measured, and assigning codes to the set values, there are assigned calibration curve codes containing the physical quantity codes assigned to the set values, one of which is identical to another one in concentration, and is the most proximal to one of the actual measurements.

It is preferable that, from concentration combination codes formed by assigning codes to a concentration combination of concentrations at "n" points selected from among the concentrations at the N points, the calibration curve codes further contain combination codes of the selected concentrations at the "n" points.

### Advantageous Effect(s) of the Invention

As described above, according to the present invention, information required to produce a calibration curve is simplified, without lowering the order of an equation representing a calibration curve, making it possible to reduce an effort required for input.

### BRIEF DESCRIPTION OF THE DRAWINGS

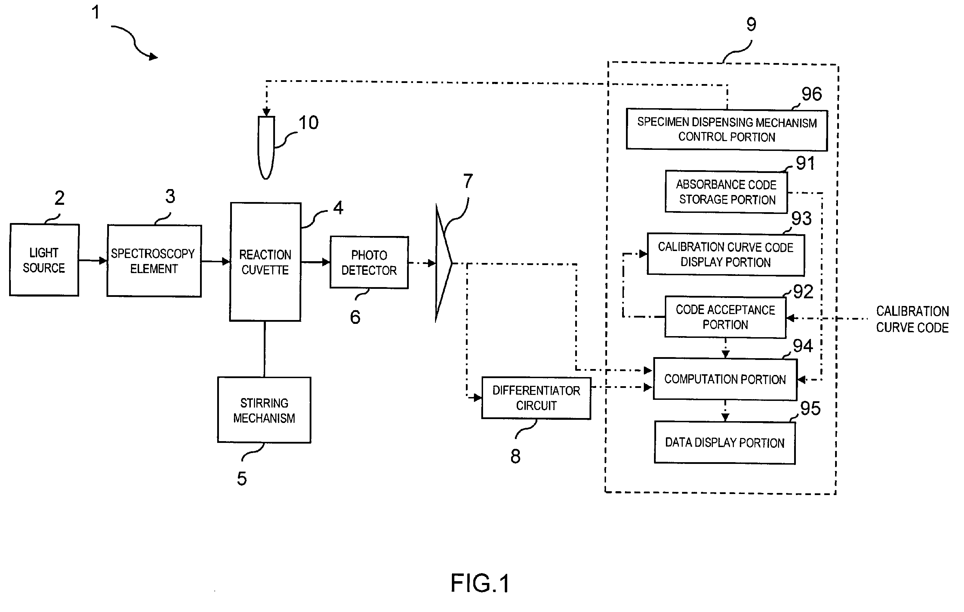

FIG. 1 is a view of an equipment configuration of an immune reaction measuring apparatus according to one embodiment of the present invention;
FIG. 2 is a view of an equipment configuration of an information processing unit in the embodiment; and
FIG. 3 is a flowchart showing a measuring method in the embodiment.

### DESCRIPTION OF SPECIFIC EMBODIMENTS

### Best Mode for Carrying out the Invention

Hereinafter, an immune reaction measuring apparatus according to one embodiment of the present invention will be described, referring to the drawings.

An immune reaction measuring apparatus 1 includes: a light source 2; a spectroscopy element 3; a reaction cuvette (or cell) 4; a stirring mechanism 5; a photo detector 6, an amplifier 7; a differentiator circuit 8; an information processing unit 9; and a specimen dispensing mechanism 10.

A tungsten lamp is employed as the light source 2, for example; a publicly known interference filter is employed as the spectroscopy element 3, for example; and a measurement wavelength which is suitable for antigen antibody reaction can be selected.

A cuvette 4 made of a transparent glass having its interior diameter of the order of 7 mm or a synthetic resin such as polystyrene is employed as the reaction cuvette 4, for example. The reaction cuvette 4 is provided with the stirring mechanism 5 in order to stir a reaction solution accommodated therein. Further, a photo cell is employed as the optical detector 6.

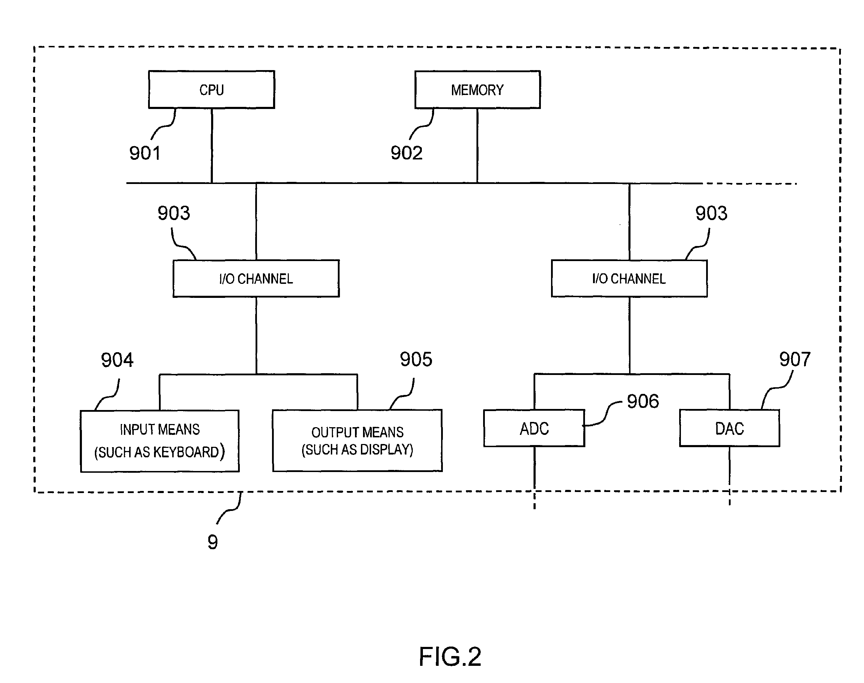

In addition to a CPU 901, the information processing unit 9, as shown in FIG. 2, is a general-purpose or exclusive unit provided with: a memory 902; an input/output channel 903; an input means 904 such as a keyboard; and an output means 905 such as a display. An analog-digital conversion circuit, such as an A/D converter 906, a D/A converter 907, or such as an amplifier (not shown), is connected to the input/output channel 903.

The information processing unit 9 is configured to store a predetermined program in the memory 902 and cooperatively operates the CPU 901 or its peripherals in accordance with the program, thereby serving as: an absorbance code storage portion 91; a code acceptance portion 92; a calibration curve code display portion 93; a computation portion 94; a data display portion 95; and a specimen dispensing mechanism control portion 96 or the like.

The absorbance code storage portion 91 employs a plurality of lots of the same reagent to:
- classify, on a concentration-by-concentration basis, the absorbances of light beams, each of which has its specific wavelength, which are measured in advance at concentrations at N points as to an antigen or an antibody targeted to be measured;
- select absorbance codes produced by assigning code numbers and concentrations at "n" points (n < N) used to produce a calibration curve from among the concentrations at the N points; and
- store concentration combination codes produced by assigning the code numbers to combinations of the respective concentrations.

Specifically, using the reagents of 9 lots, for example, when the absorbance of a specific wavelength is measured at a respective one of the 9 concentrations (A, B, C, D, E, F, G, H, I) as to an antigen or an antibody targeted to be measured, the absorbance codes, as shown in Table 1 below, are obtained. A magnitude relation among the concentrations in Table 1 is A < B < C < D < E < F < G < H < I.

**[Table 1]**

| | | ABSORBANCE | | | | | | | | |
|---|---|---|---|---|---|---|---|---|---|---|
| CONCENTRATION | | A | B | C | D | E | F | G | H | I |
| CODE NUMBER | 1 | a1 | b1 | c1 | d1 | e1 | f1 | g1 | h1 | i1 |
| | 2 | a2 | b2 | c2 | d2 | e2 | f2 | g2 | h2 | i2 |
| | 3 | a3 | b3 | c3 | d3 | e3 | f3 | g3 | h3 | i3 |
| | 4 | a4 | b4 | c4 | d4 | e4 | f4 | g4 | h4 | i4 |
| | 5 | a5 | b5 | c5 | d5 | e5 | f5 | g5 | h5 | i5 |
| | 6 | a6 | b6 | c6 | d6 | e6 | f6 | g6 | h6 | i6 |
| | 7 | a7 | b7 | c7 | d7 | e7 | f7 | g7 | h7 | i7 |
| | 8 | a8 | b8 | c8 | d8 | e8 | f8 | g8 | h8 | i8 |
| | 9 | a9 | b9 | c9 | d9 | e9 | f9 | g9 | h9 | i9 |

If 8 combinations are produced after 6 has been selected from among the 9 concentrations (A, B, C, D, E, F, G, H, I), for example, the concentration combination codes as shown in Table 2 below are obtained.

**[Table 2]**

| CODE NUMBER | COMBINATION OF CONCENTRATIONS | | | | | |
|---|---|---|---|---|---|---|
| 1 | A | B | D | E | G | H |
| 2 | A | B | D | E | G | I |
| 3 | A | B | D | F | G | H |
| 4 | A | B | D | F | G | I |
| 5 | A | C | D | E | G | H |
| 6 | A | C | D | E | G | I |
| 7 | A | C | D | F | G | H |
| 8 | A | C | D | F | G | I |

The code acceptance portion 92 accepts a calibration curve code number assigned to a calibration curve of a lot targeted for producing a calibration curve of the same reagent.

Specifically, the calibration curve code numbers are produced as follows. First, using the lot targeted for producing the calibration curve, the absorbance of a specific wavelength is measured at a respective one of the 9 concentrations (A, B, C, D, E, F, G, H, I) of the antigen or antibody targeted to be measured; and 8 preliminary calibration curves are produced, from the absorbance at the 6 concentrations in the 8 combinations shown in Table 2 above, those having been selected from the 9 concentrations, by means of a program for producing calibration curve codes. Next, from the produced 8 preliminary calibration curves, 3 of the 9 concentrations, which have been not employed to produce the preliminary calibration curves, are employed as evaluation points. With respect to the absorbance at a respective one of these 3 concentrations, a preliminary calibration curve produced when a computational value is obtained from the preliminary calibration curve and an actual measurement are the most proximal to each other is selected as a calibration curve. Methods for selecting such calibration curve from the preliminary calibration curves include: selecting a calibration curve produced when a computational value obtained from a least square method is the most proximal to the actual measurement; and selecting a calibration curve produced when a sum between the computational value obtained from the preliminary calibration curve and the actual measurement is minimal, for example.

Afterwards, the code numbers of a combination of the 6 concentrations used to produce the selected calibration curves are selected from the concentration combination codes shown in Table 2 above. At the 6 concentrations used to produce the calibration curve, the code number assigned to the absorbance that is the most proximal to the actually measured absorbance in the absorbance codes shown in Table 1 above are selected, and the calibration curve code numbers are produced by combining these code numbers with each other.

The thus obtained calibration curve code numbers are specifically those which are assigned as shown in Table 3 below, for example, and are 7-digit code numbers made of a 1-digit concentration combination code number and 6-digit absorbance code numbers.

**[Table 3]**

| CONCENTRATION COMBINATION CODE NUMBER | ABSORBANCE CODE NUMBER | | | | | |
|---|---|---|---|---|---|---|
| 2 | 5 | 8 | 8 | 8 | 8 | 8 |

The computation portion 94 then produces "n" combinations between concentrations and the absorbances from the absorbance codes and the concentration combination codes, in accordance with the obtained calibration curve code numbers; and produces a calibration curve from a combination between concentrations at "n" points and the absorbance.

Specifically, when the code acceptance portion 92 accepts the calibration curve code number described in Table 3 above, input to the information processing unit 9 by an operator or the like, the computation portion 94 acquires a combination of concentrations whose concentration combination code number is 2 (A, B, D, E, G, I) from the concentration combination code, in accordance with the concentration combination code number contained in the calibration curve code numbers. Next, the computation portion 94 acquires the absorbances corresponding to these concentrations (A, B, D, E, G, I) from the absorbance codes, in accordance with the absorbance code numbers contained in the calibration curve code numbers. Afterwards, 6 combinations between concentrations and absorbances (A, a5), (B, b8), (D, d8), (E, e8), (G, g8), (I, i8) are produced.

Among the 6 combinations between concentrations and absorbances, a low-concentration calibration curve represented by a cubic equation is obtained from 4 low concentrations. Further, a high-concentration calibration curve represented by the cubic equation is obtained from a gradient (differential value) of the calibration curve at three high concentrations and at the combination (E, e8) belonging to the high and low concentration sides. By combining these two calibration curves with each other, a calibration curve, which is compatible with a wide range of concentrations A to I, can be obtained.

The calibration curve code display portion 93 displays the calibration curve code number(s) accepted in the code acceptance portion 92. An input calibration curve code number is displayed on the calibration curve code display portion 93, whereby an operator can check legitimacy of the input code number.

The computation portion 94 further acquires calibration curve data from the code acceptance portion 92, and computes the concentration of an antigen or an antibody from the calibration curve and the quantity of light having passed through a reaction cuvette 4 having a reaction solution contained therein.

The data display portion 95 acquires the concentration data of the antigen or the antibody computed at the computation portion 94, and displays the acquired data as characters or images.

The specimen dispensing mechanism control portion 96 controls the specimen dispensing mechanism 10, and controls a voltage value applied to a piezoelectric jogging element for driving the specimen dispensing mechanism 10 made of a syringe, for example.

The specimen dispensing mechanism 10 is made of a syringe, for example, and dispenses a reagent in the reaction cuvette 4 in predetermined quantities.

In the immune reaction measuring apparatus 1 having such arrangement, the spectroscopy element 3 is first irradiated with the light emitted from the light source 2, and light having a specific wavelength is then selected. Afterwards, the reaction cuvette 4 having a reaction solution accommodated therein in advance is irradiated with the light having the specific wavelength. The light having passed through the reaction cuvette 4 is optically received by means of the optical detector 6, and the received light is converted into electrical signals.

The electrical signals based upon the quantity of the transmitted light are amplified by means of the amplifier 7, and one of these signals is directly transmitted to the computation portion 94. A computational process using a calibration curve is then applied, and the concentration of an antigen or an antibody is computed. Afterwards, the computed concentration data is transmitted to the data display portion 95, and the transmitted data is displayed as characters or images.

The electrical signals amplified by means of the amplifier 7 are transmitted to the differentiator circuit 8 in parallel; a differentiating process is then applied thereto; and a varied velocity (dA/dt) of the quantity of the transmitted light is obtained. The obtained data of the varied velocity is transmitted to the computation portion 94; a computational process using a calibration curve is then applied thereto; and the concentration of an antigen or an antibody is computed. Afterwards, the computed concentration data is transmitted to the data display portion 95, and the transmitted data is then displayed as characters or images.

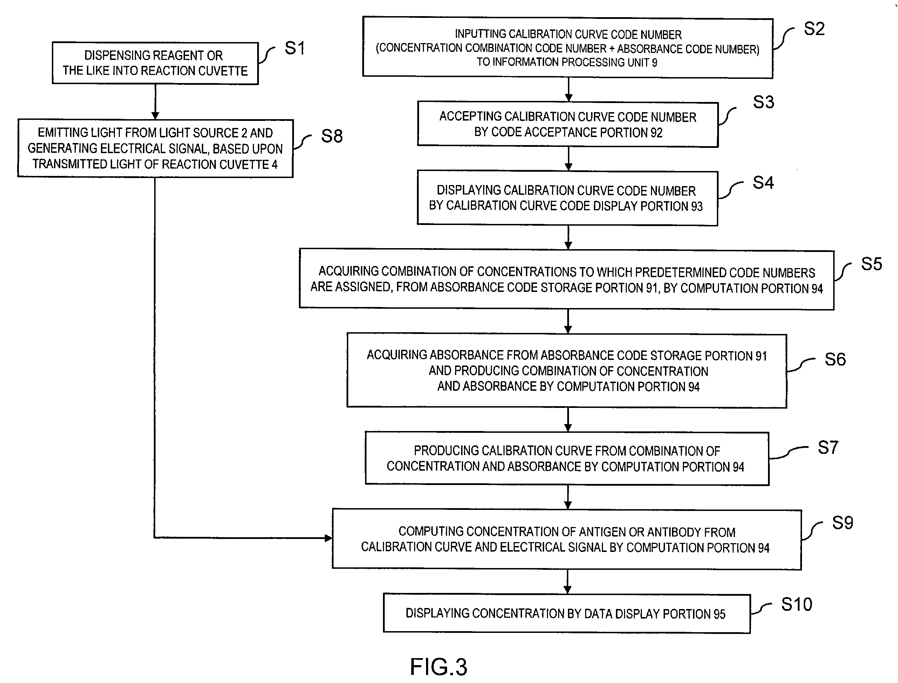

Next, procedures for measuring concentrations of antigens or antibodies in specimens, using the immune reaction measuring apparatus 1 according to the embodiment, will be described referring to the flowchart of FIG. 3. At this time, absorbance codes, concentration combination codes, and calibration curve code numbers are employed as shown in Tables 1, 2, and 3 above, respectively.

First, the specimen dispensing mechanism 10 dispends a reagent or a specimen into the reaction cuvette 4 (Step S1). The reaction solution accommodated in the reaction cuvette 4 is incubated at an appropriate temperature (for example, 37 degrees Celsius).

Next, an operator inputs calibration curve code numbers to the information processing unit 9 by an inputting means such as a keyboard (Step S2).

The code acceptance portion 92 then accepts the operator-input calibration code numbers (Step S3).

Subsequently, the calibration curve code display portion 93 acquires calibration curve code data from the code acceptance portion 92, and displays the calibration curve code numbers (Step S4).

The computation portion 94 acquires the calibration curve code data from the code acceptance portion 92, and acquires data concerning concentration combinations (A, B, D, E, G, I), each of which has concentration combination code number 2, from the absorbance code storage portion 91, in accordance with the concentration combination code numbers contained in the calibration curve code numbers (Step S5).

Further, the computation portion 94 acquires absorbance data corresponding to these concentrations (A, B, D, E, G, I) from the absorbance code storage portion 91, in accordance with the absorbance code numbers contained in the calibration curve code numbers; and produces 6 combinations between the concentrations and the absorbances (A, a5), (B, b8), (D, d8), (E, e8), (G, g8), (I, i8). (Step S6)

Next, the computation portion 94 produces a calibration curve from the abovementioned 6 combinations between the concentrations and the absorbances (A, a5), (B, b8), (D, d8), (E, e8), (G, g8), (I, i8). (Step S7)

On the other hand, when light is emitted from the light source 2, the reaction cuvette 4 is irradiated with light having a specific wavelength; the quantity of transmitted light of the reaction cuvette 4 is converted into an electrical signal by means of the photo detector 6; and the converted electrical signal is amplified by means of the amplifier 7 (Step S8).

The computation portion 94 directly receives the electrical signal amplified by means of the amplifier 7 or receives it via the differentiator circuit 8; and acquires calibration curve data from the code acceptance portion 92. This computation portion then computes the concentrations of the antigens or the antibodies from the calibration curve and the electrical signal which depends upon the quantity of light having passed through the reaction solution (Step S9).

Afterwards, the data display portion 95 acquires items of concentration data concerning the antigens or the antibodies, which are computed at the computation portion 94. This display portion then displays the data as characters or images (Step S10).

With the thus arranged immune reaction measuring apparatus 1 according to this embodiment, information required to produce calibration curves are simplified, and the calibration curve code numbers are simple, which consist of a combination of 7-digit numbers. Therefore, by means of the simplified inputs, an obtained calibration curve is produced by combining two cubic equations with each other, thus allowing the precision of the calibration curve to be highly maintained without lowering the order of an equation representing the calibration curve. Hence, the reliability of the obtained measurement result is extremely high.

The present invention is not limitative to the specific embodiment.

For example, the substances targeted to be measured, in the present invention, are not limitative to antigens or antibodies, and any substance may be used as long as a calibration curve can be employed at the time of measuring the concentrations of the substances targeted to be measured, the substances being contained in specimens.

Needless to say, the present invention may be made by appropriately combining part or all of the foregoing embodiment(s) or modified embodiment(s), and various modifications can occur without deviating from the spirit of the invention.

### Reference Numerals

1 Immune reaction measuring apparatus
91 Physical quantity (absorbance) code storage portion
92 Code acceptance portion

## Claims

1. An analyzing device for, in a reaction system containing a reagent and a substance targeted to be measured, measuring a physical quantity varying according to a concentration variation of the substance targeted to be measured, said device **characterised by** comprising:
a physical quantity code storage portion for setting one or more values of the physical quantities that can be taken in concentrations at N points of the substance targeted to be measured, and storing one or more physical quantity codes formed by assigning codes to the set values;
a code acceptance portion for accepting one or more calibration curve codes containing codes selected from the physical quantity codes in correspondence with the reagent;
a calibration curve code display portion for displaying the calibration curve codes accepted by the code acceptance portion; and
a computation portion for generating a combination between a concentration and the physical quantity, using the physical quantity codes, in accordance with the calibration curve codes, and producing a calibration curve from the combination.

2. The analyzing device according to claim 1, **characterised in that**:
the physical quantity code storage portion further stores concentration combination codes formed by assigning codes to a concentration combination for selecting one or more concentrations at "n" points from among the concentrations at the N points;
the code acceptance portion accepts the codes selected from the physical quantity codes and concentration combination codes in correspondence with a reagent; and
the computation portion produces a combination between a concentration and the physical quantity, using the physical quantity codes and the concentration combination codes, in accordance with the calibration curve codes, and produces a calibration curve from the combination.

3. A reagent, **characterised in that** it is adapted for use in:
in a reaction system containing the reagent and a substance targeted to be measured, measuring a physical quantity varying according to a concentration variation of the substance targeted to be measured, with respect to concentrations at N points of the substance targeted to be measured; and
selecting one or more concentrations at "n" points (n < N) from among the concentrations at the N points, producing preliminary calibration curves from actual measurements of the physical quantities in the concentrations at the "n" points, and selecting at least one as a calibration curve, from among the preliminary calibration curves;
wherein, from physical quantity codes formed by setting, in the concentrations at the "n" points, values of the physical quantities that can be taken in the concentrations at the N points, of the substance targeted to be measured, and assigning codes to the set values, there are assigned calibration curve codes containing the physical quantity codes assigned to the set values, one of which is identical to another one in concentration, and is the most proximal to one of the actual measurements.

4. The reagent according to claim 3, **characterised in that**:
from concentration combination codes formed by assigning codes to a concentration combination for selecting one or more concentrations at "n" points from among the concentrations at the N points, the calibration curve codes further contain combination codes of the selected concentrations at the "n" points.
